# EUROPÄISCHE PATENTSCHRIFT

(11) **EP 3 239 254 B1**
(45) Veröffentlichungstag und Bekanntmachung des Hinweises auf die Patenterteilung: **06.02.2019**
(21) Anmeldenummer: 17167921.0
(22) Anmeldetag: 25.04.2017
(51) Int. Cl.: C09D 11/107, C09D 11/12, C09D 11/322, C09D 11/38

(54) **WASSERBASIERTE TINTE FÜR DEN TINTENSTRAHLDRUCK**
WATER-BASED INK FOR INK-JET PRINTING
PEINTURE EN BASE AQUEUSE POUR L'IMPRESSION À JET D'ENCRE

(30) Priorität: 29.04.2016 DE 102016207385
(43) Veröffentlichungstag der Anmeldung: 01.11.2017
(73) Patentinhaber: Marabu GmbH & Co. KG, 71732 Tamm (DE)
(72) Erfinder: Roppert, Kriemhilt, 30559 Hannover (DE); Sommerluksch, Jochen, 73277 Owen (DE)
(74) Vertreter: Patentanwälte Ruff, Wilhelm, Beier, Dauster & Partner mbB

(56) Entgegenhaltungen:
- JP-A- 2007 177 160
- JP-A- 2015 124 379
- US-A1- 2004 189 763
- US-A1- 2010 086 692

## Beschreibung

Die Erfindung betrifft eine wasserbasierte Tinte für den Tintenstrahldruck, deren Verwendung sowie ein Verfahren zum Beschichten oder Bedrucken von Oberflächen im Tintenstrahldruck-Verfahren.

Tintenstrahldruck (englisch: inkjet printing) ist ein Verfahren, bei dem kleine Tröpfchen flüssiger Tinte erzeugt und auf das entsprechende Substrat, beispielsweise Papier, aufgebracht werden. Dabei gibt es zum einen die Möglichkeit, einen kontinuierlichen Tintenstrahl zu erzeugen (continuous inkjet, CIJ), oder zum anderen die Möglichkeit der diskontinuierlichen Erzeugung einzelner Tropfen, die nur bei Bedarf erzeugt und auf das Substrat übertragen werden (drop-ondemand, DOD).

Weit verbreitet beim DOD-Inkjet-Verfahren sind entweder Drucksysteme, bei denen die Tropfen thermisch, das heißt mithilfe eines Heizelements, erzeugt und durch die entstandene Dampfblase ausgetragen werden oder Drucksysteme, bei denen ein Piezoelement durch Anlegen einer elektrischen Spannung ausgedehnt und der Farbtropfen durch den erzeugten Überdruck ausgetragen wird.

Im Stand der Technik gibt es für den Tintenstrahldruck verschiedene sogenannte Inkjet-Tinten, die auf Basis organischer Lösungsmittel, als wasserbasierte Tinten oder als durch Strahlung härtbare Tinten hergestellt sind. Tinten auf Basis organischer Lösungsmittel und wasserbasierte Tinten trocknen durch Verdampfen der organischen Lösungsmittel und/oder durch Verdampfen des Wassers. Strahlungshärtbare Tinten trocknen und härten durch Polymerisation eines Bindemittels mit UV-Licht und geeigneten Fotoinitiatoren.

Die Verwendung wasserbasierter Tinten für den Tintenstrahldruck ist grundsätzlich bevorzugt, da beim Einsatz solcher Tinten einerseits die Freisetzung organischer Lösungsmittel beim Trocknen der Tinte reduziert und andererseits der Einsatz kennzeichnungspflichtiger Inhaltsstoffe, wie Fotoinitiatoren, mindestens teilweise vermieden werden kann.

Allerdings können wasserbasierte Tinten bis dato nicht zum Beschichten oder Bedrucken bestimmter Substrate zur Verfügung gestellt werden. So gibt es Fälle, in denen wasserbasierte Tinten beispielsweise nicht die erforderlichen Beständigkeiten, zum Beispiel eine ausreichende Nassabriebbeständigkeit, auf den entsprechenden Substraten erzielen. Dies betrifft unter anderem nicht-absorbierende Oberflächen von Substraten wie Kunstleder. So können Oberflächen von Schuhen, Taschen und dergleichen aus Kunstleder derzeit standardmäßig im Siebdruckverfahren bedruckt werden, und nicht im Tintenstrahldruck-Verfahren. Letzteres wäre jedoch in hohem Maße erwünscht, da nur der Tintenstrahldruck eine weitgehende Individualisierung des Drucks ohne zusätzliche Kosten ermöglicht. Mit anderen Worten: Gerade der Tintenstrahldruck würde es beim Bedrucken entsprechender Produkte aus Kunstleder ermöglichen, beispielsweise einen Schuh oder eine Tasche nach Vorgabe des Kunden mit einem individuellen Design zu beschichten bzw. zu bedrucken.

Kunstleder ist bekanntlich ein synthetisches Material, das sich unter anderem vom Aussehen her "echtem" Leder annähert. In der Regel handelt es sich bei Kunstleder um einen Verbund aus textilem Gewebe oder Vliesstoff mit einer Beschichtung aus Kunststoff. Diese Kunststoffbeschichtung besteht häufig aus Polyurethan (PU) oder aus Polyvinylchlorid (PVC). Dementsprechend ist die zu beschichtende Oberfläche der entsprechende Kunststoff, insbesondere PU oder PVC. Je nach Anwendungszweck und Verfahren kann es sich in diesem Zusammenhang auch um dünne Folien, vorzugsweise aus Kunststoff, insbesondere aus PU oder PVC handeln, welche bedruckt werden.

Tintenstrahldruck-Verfahren mit Tinten, die nach Kenntnis der Anmelderin die beschriebenen Anforderungen nicht erfüllen, sind in den Schutzrechtsveröffentlichungen US 2010/0086692 A1, EP 3088482 A1, US 2012/0249705 A1 und US 2013/0222477 A1 offenbart.

Dementsprechend stellt sich die Erfindung insbesondere die Aufgabe, eine wasserbasierte Tinte für den Tintenstrahldruck bereitzustellen, die ein Beschichten oder Bedrucken insbesondere von nicht-absorbierenden Oberflächen eines Substrats, vorzugsweise von Kunstleder, ermöglicht. Die so erhaltene Beschichtung oder der so erhaltene Druck auf diesem Substrat soll in hohem Maße beständig sein, und dabei insbesondere die während der Lebensdauer des entsprechenden Produkts notwendige Nass- und/oder Trockenabriebfestigkeit besitzen.

Diese Aufgabe wird gelöst durch die wasserbasierte Tinte mit den Merkmalen des Anspruchs 1. Bevorzugte Zusammensetzungen dieser Tinte sind in den abhängigen Ansprüchen beschrieben. Weiter umfasst die Erfindung die Verwendung mit den Merkmalen des Anspruchs 11 sowie das Verfahren nach Anspruch 12 mit seinen bevorzugten Ausführungen gemäß der abhängigen Ansprüche. Der Wortlaut sämtlicher Ansprüche wird hiermit durch Bezugnahme ausdrücklich zum Inhalt dieser Beschreibung gemacht.

Die erfindungsgemäße wasserbasierte Tinte für den Tintenstrahldruck umfasst mindestens ein Pigment, mindestens ein polymeres Bindemittel, mindestens ein organisches Lösungsmittel und Wasser. Dabei ist als organisches Lösungsmittel mindestens ein wasserlösliches organisches Lösungsmittel vorgesehen, ausgewählt aus der Gruppe 3-Methyl-3-Methoxybutanol (MMB), Methoxybutanol (MB) und Propylenglykolmonomethylether (MP), in einer Menge zwischen 1 Gew.-% und 20 Gew.-%, bezogen auf das Gesamtgewicht der Tinte. Ebenfalls vorgesehen ist mindestens ein Pyrrolidon-Lösungsmittel als weiteres organisches Lösungsmittel in einer Menge zwischen 2 und 20 Gew.-%, bezogen auf das Gesamtgewicht der Tinte. Weiter enthält die erfindungsgemäße Tinte zusätzlich als Additiv mindestens ein Wachs, vorzugsweise ein mikronisiertes Wachs, und zwar in einer Menge von 0,05 Gew.-% und 3,5 Gew.-%, bezogen auf das Gesamtgewicht der Tinte.

Unter dem Begriff "Tinte" soll erfindungsgemäß jede Lösung oder Dispersion von Farbmitteln in Lösungsmitteln verstanden werden. In der Regel enthalten solche Tinten nur einen geringen Anteil an Bindemitteln. Bevorzugt handelt es sich bei der erfindungsgemäßen Tinte um eine Dispersion des entsprechenden Pigments oder der entsprechenden Pigmente im verwendeten wasserbasierten Lösungsmittelsystem. Der Begriff "wasserbasiert" bedeutet in diesem Zusammenhang, dass bei der erfindungsgemäßen Tinte im Lösungsmittelsystem aus Wasser und organischen Lösungsmitteln das Wasser einen (wesentlich) größeren Anteil besitzt gegenüber den organischen Lösungsmitteln.

"Pigmente" sind farbgebende Substanzen, die (im Gegensatz zu Farbstoffen) in der Regel im verwendeten Lösungsmittelsystem unlöslich oder weitgehend unlöslich sind.

"Bindemittel", häufig auch Harz genannt, ist ein Bestandteil der Tinte, der einerseits die Pigmente und die übrigen Bestandteile der Tinte aneinander bindet und andererseits die Haftung zum Substrat unterstützt. Wie bereits erwähnt, enthalten wasserbasierte Tinten für den Tintenstrahldruck in der Regel nur vergleichsweise geringe Mengen an Bindemittel, erfindungsgemäß in Mengen ≤ 10 Gew.-%, bezogen auf das Gesamtgewicht der Tinte.

"Lösungsmittel" im Sinne der Erfindung sind Flüssigkeiten, in denen die übrigen Bestandteile der Tinte dispergiert und/oder gelöst werden können. In der Regel finden dabei keine chemischen Reaktionen zwischen den dispergierten/gelösten Stoffen und den Lösungsmitteln statt.

"Wachse" im Sinne der Erfindung sind organische Substanzen, in der Regel synthetische organische Verbindungen, die bei vergleichsweise niederen Temperaturen schmelzen. Wachse sind in der Regel unlöslich in Wasser, aber löslich in organischen Lösungsmitteln. Solche Wachse werden häufig in Form wässriger Emulsionen eingesetzt. Erfindungsgemäß kommen vorzugsweise Wachse auf Basis von Polyethylenen (PE) zum Einsatz. "Mikronisierte Wachse" sind Wachse mit hoher Feinheit, bei denen also die entsprechenden Wachspartikel stark verkleinert sind. Diese Verkleinerung erfolgt in der Regel durch Vermahlen. Dabei können die Partikelgrößen (D50) vorzugsweise weniger als 100 µm, insbesondere weniger als 10 µm, betragen.

Wie bereits beschrieben, umfasst das Lösungsmittelsystem der erfindungsgemäßen Tinte mindestens ein wasserlösliches organisches Lösungsmittel, ausgewählt aus der Gruppe MMB, MB und MP. Dabei ist es bevorzugt, wenn es sich bei dem verwendeten wasserlöslichen organischen Lösungsmittel um MMB (3-Methyl-3-Methoxybutanol) handelt.

Die genannten wasserlöslichen organischen Lösungsmittel sind, entweder einzeln oder in Kombination, in der erfindungsgemäßen Tinte vorzugsweise in einer Menge zwischen 1 Gew.-% und 15 Gew.-%, bezogen auf das Gesamtgewicht der Tinte enthalten. Innerhalb dieses Mengenbereichs sind Mengen an wasserlöslichem organischem Lösungsmittel zwischen 5 Gew.-% und 12 Gew.-%, insbesondere zwischen 5 Gew.-% und 8 Gew.-%, weiter bevorzugt.

Wie im Zusammenhang mit der Definition des Begriffs "Wachs" bereits erläutert, können in der erfindungsgemäßen Tinte unterschiedliche Wachse insbesondere auf Polyethylenbasis zum Einsatz kommen. Besonders bevorzugt sind sogenannte HDPE-Wachse, wobei HD für "high density" und PE für "polyethylene" steht. Weitere geeignete Wachse sind beispielsweise Polypropylenwachse, Paraffinwachse, Carnaubawachs und Mischungen aller vorgenannten Wachse, insbesondere ebenfalls in mikronisierter Form.

Bei bevorzugten Ausführungsformen der erfindungsgemäßen Tinte ist das Wachs, insbesondere das mikronisierte Wachs, in einer Menge zwischen 0,2 Gew.-% und 3 Gew.-%, insbesondere in einer Menge zwischen 0,8 Gew.-% und 1,5 Gew.-%, jeweils bezogen auf das Gesamtgewicht der Tinte, enthalten.

Wie bereits erläutert, enthält die erfindungsgemäße Tinte neben dem bereits beschriebenen wasserlöslichen organischen Lösungsmittel mindestens ein weiteres organisches Lösungsmittel. Hierbei handelt es sich um ein Pyrrolidon-Lösungsmittel, d.h. um Pyrrolidon (in der Regel 2-Pyrrolidon) oder um ein von Pyrrolidon abgeleitetes Lösungsmittel. Dieses weitere organische Lösungsmittel ist in der erfindungsgemäßen Tinte in einer Menge zwischen 2 Gew.-% und 20 Gew.-%, insbesondere in einer Menge zwischen 5 Gew.-% und 15 Gew.-%, enthalten. Diese Mengenangaben sind ebenfalls bezogen auf das Gesamtgewicht der Tinte.

Bevorzugt als weitere organische Lösungsmittel sind 1-(2-Hydroxyethyl)-2-pyrrolidon, N-Methyl-2-pyrrolidon (NMP), N-Ethylpryrrolidon (NEP) oder insbesondere 2-Pyrrolidon.

Bei der Erfindung kann das in der Tinte enthaltene polymere Bindemittel aus verschiedenen Monomeren hergestellt sein, beispielsweise aus Vinyl-Monomeren. Neben diesen Vinyl-Monomeren können die Bindemittel auch aus Acrylat-Monomeren, Methacrylat-Monomeren, Styrol-Monomeren, aus Ethylen, Vinylchlorid, Vinylidenchlorid und anderen Monomeren, sowie aus Mischungen aller dieser Monomere hergestellt sein. Es ist besonders bevorzugt, wenn das polymere Bindemittel aus Acrylat-, Methacrylat- und/oder Styrol-Monomeren hergestellt ist.

Die in der erfindungsgemäßen Tinte enthaltenen polymeren Bindemittel können unterschiedliche Molekulargewichte aufweisen. Durchschnittliche Molekulargewichte (M_{W}) von ca. 5.000 bis ca. 500.000 sind bevorzugt. Innerhalb dieses Bereichs sind Molekulargewichte (M_{W}) zwischen etwa 100.000 und etwa 500.000, insbesondere zwischen 200.000 und 300.000, weiter hervorzuheben.

Die durchschnittliche Teilchengröße der eingesetzten polymeren Bindemittel kann zwischen wenigen nm und wenigen µm ausgewählt sein, wobei vorzugsweise ein Bereich zwischen etwa 10 nm und etwa 1 µm zu nennen ist. Die Verteilung der Teilchengrößen ist in der Regel nicht kritisch, so dass sowohl Bindemittel mit einer breiten Verteilung an Teilchengrößen als auch mit einer engen Verteilung an Teilchengrößen eingesetzt werden können. Üblicherweise wird das polymere Bindemittel, insbesondere ein Bindemittel auf Acrylharz-Basis, der erfindungsgemäßen Tinte in Form einer Emulsion zugesetztsein.

Als Pigmente können in der erfindungsgemäßen Tinte alle gängigen Pigmente eingesetzt werden, wie sie im Tintenstrahldruck Verwendung finden. Hierbei handelt es sich beispielsweise um Rußpartikel, zur Erzeugung von schwarz. Auch der Einsatz farbiger Pigmente ist in üblicher Weise möglich, wobei insbesondere farbige Pigmente auf Basis von Quinacridonen, Isoindolinen, Isoindolinonen, Phthalocyaninen und Benzimidazolonen zum Einsatz kommen können.

Bei bevorzugten Ausführungsformen der Erfindung sind das Pigment oder die Pigmente in der Tinte in einer Menge zwischen 0,5 Gew.-% und 10 Gew.-%, vorzugsweise in einer Menge zwischen 1 Gew.-% und 8 Gew.-%, bezogen auf das Gesamtgewicht der Tinte, enthalten. Innerhalb des zuletzt genannten Bereichs sind Pigmentmengen zwischen 2 Gew.-% und 4 Gew.-% weiter bevorzugt.

In Übereinstimmung mit der eingangs gemachten Definition einer wasserbasierten Tinte für den Tintenstrahldruck enthält die erfindungsgemäße Tinte Wasser, vorzugsweise in einer Menge zwischen 40 Gew.-% und 70 Gew.-%, bezogen auf das Gesamtgewicht der Tinte. Innerhalb dieses Mengenbereichs sind Mengen an Wasser zwischen 45 Gew.-% und 55 Gew.-% weiter bevorzugt. Dabei findet in der erfindungsgemäßen Tinte insbesondere entmineralisiertes Wasser als Bestandteil der Tinte Verwendung.

In Weiterbildung kann die erfindungsgemäße Tinte weitere Additive enthalten, wie sie bei Tinten für den Tintenstrahldruck, insbesondere bei wasserbasierten Tinten für den Tintenstrahldruck, üblich sind. In diesem Zusammenhang sind zunächst nicht-ionische, kationische und/oder anionische oberflächenaktive Substanzen (Tenside) als solche Bestandteile zu nennen. Diese oberflächenaktiven Substanzen können beispielsweise in Mengen zwischen 0,01 Gew.-% bis 10 Gew.-% enthalten sein. Innerhalb dieses Bereichs sind Gehalte dieser Additive zwischen 0,5 Gew.-% und 3 Gew.-% als bevorzugt zu nennen.

Weiter können Additive zur Viskositätseinstellung (auch als Verdicker bezeichnet), Additive zur Einstellung des pH-Werts, Konservierungsmittel, Biozide und andere Additive in der erfindungsgemäßen Tinte enthalten sein.

Weiter umfasst die Erfindung auch die Verwendung der wasserbasierten erfindungsgemäßen Tinte, wie sie vorstehend beschrieben wurde, zum Beschichten oder Bedrucken von Oberflächen im Tintenstrahl-Verfahren. Bezüglich bevorzugter Merkmale für diese Verwendung wird auf die entsprechenden Merkmale im Zusammenhang mit der erfindungsgemäßen Tinte verwiesen, wie sie vorstehend ausführlich beschrieben wurden.

Schließlich umfasst die Erfindung auch ein Verfahren zum Beschichten oder Bedrucken von Oberflächen im Tintenstrahldruck-Verfahren. Dieses Verfahren ist dadurch gekennzeichnet, dass die Oberfläche eines Substrats mit der erfindungsgemäßen Tinte, wie sie vorstehend beschrieben wurde, beschichtet oder bedruckt wird. Dabei handelt es sich insbesondere bei dieser Oberfläche um eine nicht-absorbierende Oberfläche. Der Begriff "nicht-absorbierend" soll dabei im Sinne der Erfindung so verstanden werden, dass die entsprechende Oberfläche vergleichsweise schwer mit einer wasserbasierten Tinte benetzt und dementsprechend beschichtet werden kann. Es wird sich also in der Regel bei einer nicht-absorbierenden Oberfläche um eine nicht-poröse Oberfläche handeln und/oder um eine vergleichsweise glatte Oberfläche. Beide Arten von Oberflächen erschweren ein Anhaften der Tinte an dieser Oberfläche. Dies trifft auch häufig für Kunstleder als Substrat bei einem Beschichten/Bedrucken im Tintenstrahldruck-Verfahren zu.

Erfindungsgemäß ist das beschriebene Verfahren vorzugsweise dadurch gekennzeichnet, dass die Oberfläche des entsprechenden Substrats ohne Hilfe eines Haftvermittlers beschichtet oder bedruckt wird. Dies bedeutet, dass das Substrat ohne (vorheriges) Aufbringen eines Haftvermittlers (Primers) mit der erfindungsgemäßen Tinte beschichtet werden kann, und trotzdem die eingangs beschriebene Aufgabe erfüllt wird, nämlich ein dauerhaftes Beschichten auch nichtabsorbierender Oberflächen/Untergründe zu gewährleisten.

Der beschriebene Verzicht auf den Einsatz eines Haftvermittlers bedeutet nicht, dass in jedem Fall auf eine andere übliche Vorbehandlung der Oberfläche verzichtet werden soll. So lassen sich auch beim erfindungsgemäßen Verfahren ohne Weiteres übliche Vorbehandlungen, wie Reinigung mit Lösungsmitteln, Corona-Behandlung, Plasma-Behandlung und/oder Beflammen erfindungsgemäß durchführen.

Weiter ist es bei dem erfindungsgemäßen Verfahren bevorzugt, wenn die entsprechende Oberfläche des Substrats nach dem Beschichten oder Bedrucken im Tintenstrahldruck-Verfahren nicht mit einem Überlack oder Decklack versehen wird. Die erfindungsgemäße Aufgabe der Bereitstellung einer dauerhaften Beschichtung mit der erfindungsgemäßen Tinte lässt sich also auch ohne Aufbringen eines solchen Decklacks oder Überlacks erreichen. Bei besonders bevorzugten Ausführungsformen des erfindungsgemäßen Verfahrens kann also dementsprechend sowohl auf den vorherigen Einsatz eines Haftvermittlers (Primers) als auch auf das anschließende Aufbringen eines Überlacks/Decklacks verzichtet werden.

In Weiterbildung ist ein erfindungsgemäßes Verfahren weiter bevorzugt, bei dem es sich bei der Oberfläche des Substrats um eine Oberfläche aus einem Polyurethan (PU) oder aus einem Polyvinylchlorid (PVC) handelt. Beide Materialien besitzen in der Regel nicht-poröse, glatte Oberflächen, die trotzdem mit dem erfindungsgemäßen Verfahren zuverlässig beschichtet werden können. Vorzugsweise handelt es sich bei dem Substrat, und in besonderem Maße im Falle von Oberflächen aus PU und PVC, um Kunstleder. Dementsprechend lassen sich erfindungsgemäß besonders gut Produkte aus Kunstleder, beispielsweise Schuhe, Sportschuhe, Taschen, Sporttaschen und dergleichen erfindungsgemäß beschichten oder bedrucken. Dies gilt auch für Folien und Deckfolien, die die Oberfläche solcher Substrate bilden und auf deren (nicht bedruckter) Rückseite dann ein Trägermaterial und/oder ein Klebemittel vorgesehen ist oder anbringbar ist.

Wie die obigen Ausführungen zeigen, ist die Erfindung mit einer ganzen Reihe von Vorteilen verbunden.

Wie bereits erläutert, stellt die Erfindung eine neue wasserbasierte Tinte für den Tintenstrahldruck zur Verfügung. Diese Tinte ist in besonderer Weise geeignet, auf unterschiedlichste Untergründe und Oberflächen von Substraten aufgebracht zu werden und dort nach Trocknung beständig anzuhaften. Die entsprechenden Beschichtungen und Drucke mit der erfindungsgemäßen Tinte besitzen eine ausreichend gute Beständigkeit gegen Nassabrieb und/oder Trockenabrieb.

Vorzugsweise können mit der erfindungsgemäßen Tinte nicht-absorbierende Substrate wie Kunstleder oder dessen Deckschichten/Deckfolien, das heißt insbesondere nicht-poröse und glatte Kunststoffoberflächen, zum Beispiel aus Polyurethanen oder aus Polyvinylchlorid beschichtet oder bedruckt werden.

Die erfindungsgemäße Tinte ist wasserbasiert, so dass beim Trocknen der Tinte vergleichsweise geringe Anteile an organischen Lösungsmitteln in die Umwelt gelangen. Außerdem kann bei der erfindungsgemäßen Tinte mit ihrem wasserbasierten Lösungsmittelsystem auf den Einsatz vieler kennzeichnungspflichtiger Inhaltsstoffe verzichtet werden, wie sie beispielsweise in UVhärtenden Tinten enthalten sind.

Durch die neue wasserbasierte Tinte nach der Erfindung wird dem Tintenstrahldruck ein neues Anwendungsgebiet bei der Beschichtung von nicht-absorbierenden Substraten, insbesondere von Kunstleder, erschlossen. Damit können dort die Vorteile des Tintenstrahldrucks voll zum Tragen kommen, nämlich auf den entsprechenden Substraten individuelle Drucke und Druckmuster, gegebenenfalls nach Vorgabe des Kunden, zu erzeugen. Dies war bis dato nicht möglich.

Weitere Merkmale und Vorteile der Erfindung ergeben sich aus der nachfolgenden Beschreibung von bevorzugten Ausführungsformen in Beispielen und Vergleichsbeispielen. Dabei können die einzelnen Merkmale der Erfindung jeweils für sich alleine oder in Kombination miteinander verwirklicht sein. Die nachfolgend beschriebenen Beispiele dienen lediglich der weiteren Erläuterung der Erfindung, ohne die Erfindung auf den Offenbarungsgehalt der Beispiele zu beschränken.

### BEISPIELE

Die in den Beispielen und Vergleichsbeispielen offenbarten Tinten wurden durch Vermischen der einzelnen Komponenten hergestellt. Anschließend wurden diese Tinten mithilfe eines Flachbett-Tintenstrahldruckers (motionjet pro 420 der Firma DP Solutions, Renchen, Deutschland) auf verschiedene Polyurethansubstrate der Firma SanFang Chemical Industry, Taiwan aufgebracht. Bei diesen Polyurethansubstraten handelt es sich um sogenanntes Kunstleder, bei dem auf einem textilen Gewebe oder Vliesstoff eine Polyurethanbeschichtung aufgebracht ist, bzw. um dessen (Deck-)Folien. Lediglich beispielhaft kann hier ein Substrat der Firma SanFang mit der Bezeichnung CK75 genannt werden.

In den vorliegenden Fällen wurden die entsprechenden flächigen Substrate unterschiedlicher Dicke mithilfe eines Lösungsmittels, beispielsweise Isopropylalkohol vorgereinigt und dann auf dem genannten Flachbettdrucker mit den entsprechenden Tinten beschichtet/bedruckt. Die Substrattemperatur beim Druck betrug dabei in der Regel ca. 45°C.

Die erhaltenen bedruckten Substrate wurden hinsichtlich der Eigenschaften Nassabrieb und Trockenabrieb gemäß DIN EN ISO 105-X12: 2002 und AATCC8 untersucht. Der weiteren Bewertung dieser Eigenschaften wurde dann die sogenannte Echtheitszahl zugrunde gelegt, wobei die Echtheitszahl 5 für das beste und die Echtheitszahl 1 für das schlechteste Prüfergebnis steht.

Bei der Bewertung nach der Erfindung wurde eine Echtheitszahl von 3,8 als Unterscheidungsmerkmal und Qualitätsmerkmal definiert. Dementsprechend erfüllen Echtheitszahlen unterhalb 3,8 die Qualitätsvorgaben für die Erfindung nicht, wohingegen Echtheitszahlen ab 3,8 oder besser als ausreichend betrachtet werden. Echtheitszahlen zwischen 4,0 und 4,5 werden als gute Ergebnisse, Echtheitszahlen zwischen 4,5 und 5,0 als sehr gute Ergebnisse eingestuft.

### Beispiel 1

Zunächst wurden vier Formulierungen für erfindungsgemäße Tinten für "schwarz" und die Farben "cyan", "magenta" und "yellow" bereitgestellt, wie folgt

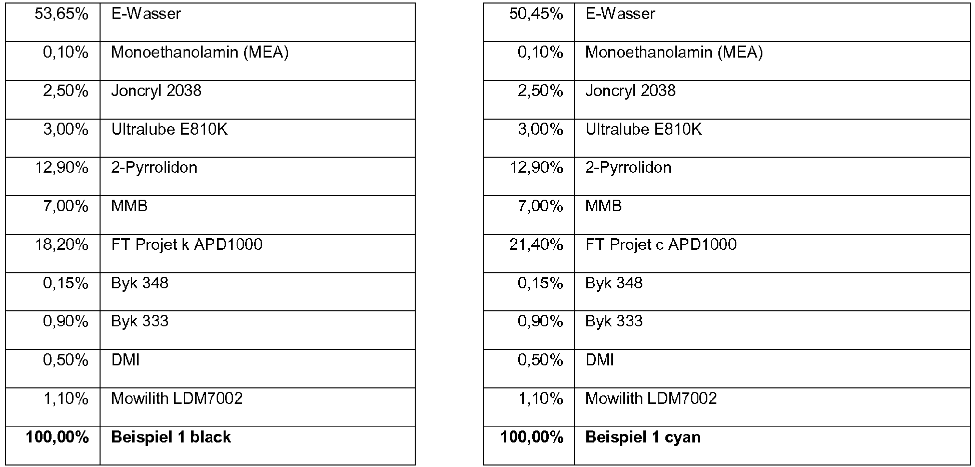

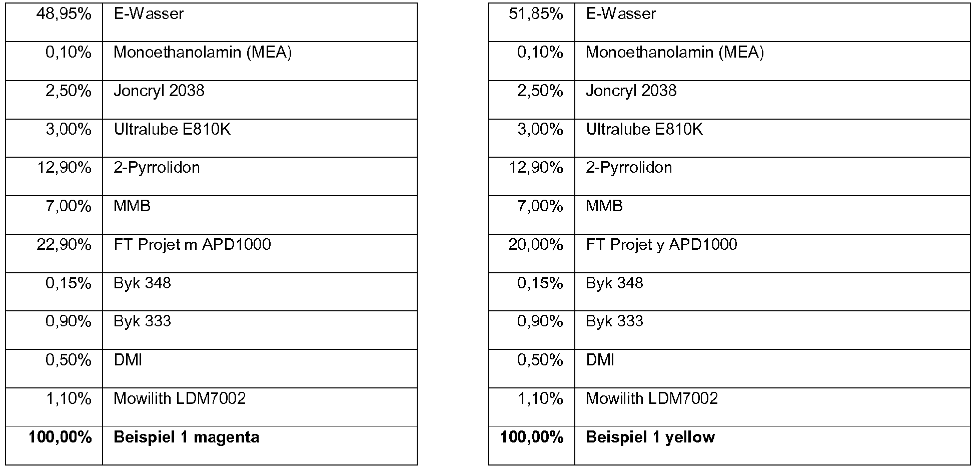

Die in den oben genannten vier Formulierungen genannten Bestandteile (% stehen für Gew.-%) werden im Folgenden wie folgt erläutert:
- E-Wasser: demineralisiertes Wasser
- Monoethanolamin (MEA): Additiv zur Einstellung des pH-Werts (basisch)
- Joncryl 2038: Bindemittel auf Acrylharz-Basis (von der Firma BASF, Deutschland) - Dispersion mit 43,5 % Feststoffgehalt
- Ultralube E810K: mikronisiertes Wachs auf PE-Basis, eingesetzt als Emulsion mit einem Wachsgehalt von 35% (von der Firma keim additec surface GmbH, Kirchberg, Deutschland)
- 2-Pyrrolidon: (zusätzliches) organisches Pyrrolidon-Lösungsmittel
- MMB (3-Methyl-3-methoxybutanol) (wasserlösliches organisches Lösungsmittel)
- FT Projet APD 1000 (k, c, m, y): (Farb-)Pigmente schwarz, cyan, magenta, gelb (von der Firma Fujifilm) - Dispersionen mit 14 % (k, c, m) bzw. 16 % (y) Feststoffgehalt
- Byk 348, Byk 333: oberflächenaktive Substanzen (von der Firma BYK-Chemie, Deutschland)
- DMI: 1,3-Dimethyl-2-imidazolidinon (organisches Lösungsmittel)
- Mowilith LDM 7002: Verdicker/Bindemittel (von der Firma Celanese Emulsions GmbH, Sulzbach, Deutschland)

Alle vier Formulierungen der erfindungsgemäßen Tinten nach Beispiel 1 wiesen bei der Prüfung auf Nassabrieb und Trockenabrieb Echtheitszahlen im Bereich zwischen 4,5 und 5,0 auf. Die entsprechenden Beschichtungen/Drucke auf den genannten Polyurethansubstraten sind also in hohem Maße beständig.

### Beispiel 2

Bei allen vier Formulierungen gemäß Beispiel 1 wurde das dort verwendete Wachs Ultralube E810K durch das Wachs Albicera HD4020 der Firma Paramelt, Hamburg, Deutschland, ersetzt, und zwar in der Beispiel 1 entsprechenden Menge. Auch bei dem Wachs Albicera HD4020 handelt es sich um ein mikronisiertes Wachs auf PE-Basis. Auch für die so erhaltenen Tinten liegen die bestimmten Echtheitszahlen im Bereich zwischen 4,0 und 5,0.

### Beispiel 3

Ausgehend von den Formulierungen gemäß Beispiel 1 wurde bei allen Formulierungen das wasserlösliche organische Lösungsmittel MMB durch das Lösungsmittel MP (Propylenglykolmonomethylether) ersetzt. Bei allen Formulierungen lagen die bestimmten Echtheitszahlen für Nassabrieb und Trockenabrieb bei den entsprechenden Drucken auf den Polyurethansubstraten zwischen 4,0 und 5,0.

### Beispiel 4

Ausgehend von Beispiel 1 wurde bei allen vier Formulierungen der Mengenanteil an MMB von 7 Gew.-% auf 11 Gew.-% erhöht und der Wasseranteil jeweils um 4 Gew.-% reduziert. Der Anteil der übrigen Bestandteile, einschließlich des Anteils an weiterem organischem Lösungsmittel 2-Pyrrolidon, blieb konstant.

Auch hier ergab die Prüfung auf Nass- und Trockenabrieb nach dem entsprechenden Druck auf Polyurethansubstrate Echtheitszahlen zwischen 4,0 und 5,0.

### Beispiel 5

Ausgehend von Beispiel 1 wurde bei allen vier Formulierungen der Anteil von 2-Pyrrolidon von 12,9 Gew.-% auf 7,0 Gew.-% abgesenkt und der Wasseranteil entsprechend um 5,9 Gew.-% erhöht. Der Anteil der übrigen Bestandteile einschließlich des Anteils von MMB blieb konstant. Auch die Formulierungen mit geändertem Anteil an 2-Pyrrolidon gemäß dieses Beispiels 5 waren weiterhin für den Inkjetdruck auf Polyurethansubstraten geeignet. Alle bestimmten Echtheitszahlen bei der Prüfung auf Nassabrieb und Trockenabrieb lagen oberhalb 3,8, vorzugsweise zwischen 4,0 und 5,0.

### Beispiel 6

Ausgehend von Beispiel 1 wurde das weitere organische Lösungsmittel 2-Pyrrolidon gemäß Beispiel 1 in diesem Beispiel 6 durch 1-(2-Hydroxyethyl)-2-pyrrolidon (in gleicher Menge) ersetzt.

Der Ersatz von 2-Pyrrolidon erfolgte dabei jeweils in allen vier Formulierungen (Schwarz, Cyan, Magenta, Yellow).

Auch hier lagen die bestimmten Echtheitszahlen bei der Prüfung auf Nassabrieb und Trockenabrieb bei Drucken auf den Polyurethansubstraten zwischen 4,0 und 5,0.

### Beispiel 7

Bei diesem Beispiel wurde das Beispiel 1 dahingehend modifiziert, dass vor dem Bedrucken der Substrate mit den Tinten gemäß Beispiel 1 nicht nur eine Vorreinigung mit Isopropylalkohol durchgeführt wurde, sondern auch noch eine HF(Hochfrequenz)-Corona-Behandlung. Diese Behandlung erfolgte mit einer Anlage der Firma Tantec, Dänemark (bei einer Einstellung von 12 kV/251 W). Die Prüfung auf Nassabrieb und Trockenabrieb eines Drucks auf so vorbehandelten Polyurethansubstraten ergab sämtlich Echtheitszahlen im Bereich zwischen 4,5 und 5,0.

Um die Bewertung der beschriebenen Beispiele 1 bis 7 noch weiter zu verbessern, wurden die folgenden Vergleichsbeispiele durchgeführt.

### Vergleichsbeispiel 1

Ausgehend von Beispiel 1 wurde bei allen Formulierungen das enthaltene mikronisierte Wachs durch Wasser ersetzt. Nach einem entsprechenden Druckversuch auf den Polyurethansubstraten war bei den Formulierungen eine Prüfung nach Norm AATCC8 aufgrund der mangelnden Haftung nicht möglich. Eine Prüfung nach DIN EN ISO 105-X12:2002 ergab Echtheitszahlen von unterhalb 3,8, nämlich zwischen 2,0 und 3,0.

### Vergleichsbeispiel 2

Ausgehend von Beispiel 1 wurde in allen vier Formulierungen der Wachsanteil (Emulsion Ultralube E810K) von 3,0 Gew.-% auf 12,0 Gew.-% erhöht, und anteilig der Wassergehalt um 9 Gew.-% verringert. Bei Drucken mit den entsprechenden Tinten auf den Polyurethansubstraten ergaben die Prüfungen lediglich Echtheitszahlen zwischen 2,5 und 3,5.

### Vergleichsbeispiel 3

Ausgehend von Beispiel 1 wurde in allen vier Formulierungen das Lösungsmittel MMB durch 2-Pyrrolidon ersetzt, so dass sich also ein Gesamtgehalt von 2-Pyrrolidon in den Tinten von 19,9 Gew.-% ergab. Auch hier lagen die Echtheitszahlen bei der Prüfung auf Nassabrieb und Trockenabrieb unterhalb des akzeptablen Bereichs, nämlich lediglich zwischen 2,5 und 3,5.

### Vergleichsbeispiel 4

Ausgehend von Beispiel 1 wurde in allen vier Formulierungen das Lösungsmittel MMB durch Propylenglykol ersetzt, und zur Beibehaltung und Einstellung der für den Druck notwendigen Viskosität der Gehalt an Verdicker (Mowilith LDM 7002) auf 0,6 % abgesenkt.

Auch hier lagen die Echtheitszahlen bei der Prüfung auf Nassabrieb und Trockenabrieb unterhalb des akzeptablen Bereichs, nämlich lediglich zwischen 2,5 und 3,5.

### Vergleichsbeispiel 5

Ausgehend von Beispiel 1 wurde in allen vier Formulierungen sowohl das Lösungsmittel MMB als auch das Lösungsmittel 2-Pyrrolidon durch Propylenglykol ersetzt. Zur Beibehaltung und Einstellung der Viskosität für den Druck wurde der Verdicker (Mowilith LDM 7002) vollständig weggelassen.

Auch hier lagen die Echtheitszahlen bei der Prüfung auf Nassabrieb und Trockenabrieb unterhalb des akzeptablen Bereichs, nämlich lediglich zwischen 2,5 und 3,5.

### Vergleichsbeispiel 6

Ausgehend von Beispiel 1 wurde in allen vier Formulierungen das Lösungsmittel MMB durch Diethylenglykol und das Lösungsmittel 2-Pyrrolidon durch Glycerin ersetzt.

Bei der Prüfung auf Nassabrieb und Trockenabrieb schwankten die Echtheitszahlen stark, lagen jedoch sämtlich im Bereich von unbefriedigenden 1,0 bis 3,0.

### Vergleichsbeispiel 7

In diesem Beispiel wurde ausgehend von Beispiel 1 der Anteil an MMB von 7 Gew.-% auf 22 Gew.-% erhöht und der Wassergehalt entsprechend um 15 Gew.-% reduziert. Der Anteil der übrigen Bestandteile, einschließlich des Anteils an 2-Pyrrolidon blieb konstant. Die erhaltenen Formulierungen der Tinte waren für den Inkjetdruck nicht geeignet. Der erhöhte MMB-Anteil destabilisiert offenbar die zugrundeliegenden Polymer- und/oder Pigmentdispersionen und führt beispielsweise zu einer Erhöhung der Partikelgrößen, der Viskosität und/oder zu einer Sedimentation. Um einen Inkjetdruck wenigstens zu simulieren, wurden die Tinten gemäß Vergleichsbeispiel 7 mit einem Airbrushsystem auf die Substrate analog zum Inkjetdruck aufgebracht. Bei der Prüfung auf Nassabrieb und Trockenabrieb schwankten die Echtheitszahlen stark, lagen jedoch sämtlich im Bereich von unbefriedigenden 1,0 bis 3,0.

Dementsprechend zeigt die Auswertung der Beispiele und Vergleichsbeispiele, dass lediglich die wasserbasierten Tinten, die die beanspruchten Merkmale gemäß Anspruch 1 und der bevorzugten Unteransprüche aufweisen, dauerhafte Beschichtungen und Drucke auf den entsprechenden Substraten ermöglichen.

## Patentansprüche

1. Wasserbasierte Tinte für den Tintenstrahldruck, mindestens umfassend mindestens ein Pigment, mindestens ein polymeres Bindemittel, mindestens ein organisches Lösungsmittel und Wasser, wobei
- als organisches Lösungsmittel mindestens ein wasserlösliches organisches Lösungsmittel vorgesehen ist, ausgewählt aus der Gruppe 3-Methyl-3-Methoxybutanol (MMB), Methoxybutanol (MB) und Propylenglykolmonomethylether (MP), in einer Menge zwischen 1 und 20 Gew.-%, bezogen auf das Gesamtgewicht der Tinte,
- mindestens ein Pyrrolidon-Lösungsmittel als weiteres organisches Lösungsmittel in einer Menge zwischen 2 und 20 Gew.-%, bezogen auf das Gesamtgewicht der Tinte, vorgesehen ist, und
- die Tinte zusätzlich als Additiv mindestens ein vorzugsweise mikronisiertes Wachs enthält, in einer Menge zwischen 0,05 und 3,5 Gew.-%, bezogen auf das Gesamtgewicht der Tinte.

2. Tinte nach Anspruch 1, **dadurch gekennzeichnet, dass** es sich bei dem wasserlöslichen organischen Lösungsmittel um 3-Methyl-3-Methoxybutanol (MMB) handelt.

3. Tinte nach Anspruch 1 oder Anspruch 2, **dadurch gekennzeichnet, dass** das wasserlösliche organische Lösungsmittel in einer Menge zwischen 1 und 15 Gew.-%, insbesondere in einer Menge zwischen 5 und 12 Gew.-%, bezogen auf das Gesamtgewicht der Tinte, vorgesehen ist.

4. Tinte nach einem der vorhergehenden Ansprüche, **dadurch gekennzeichnet, dass** es sich bei dem Wachs um ein Wachs auf Polyethylenbasis, insbesondere um ein Wachs aus HDPE (High Density Polyethylen) handelt.

5. Tinte nach einem der vorhergehenden Ansprüche, **dadurch gekennzeichnet, dass** das Wachs in einer Menge zwischen 0,2 und 3 Gew.-%, insbesondere in einer Menge zwischen 0,8 und 1,5 Gew.-%, bezogen auf das Gesamtgewicht der Tinte, enthalten ist.

6. Tinte nach einem der vorhergehenden Ansprüche, **dadurch gekennzeichnet, dass** das Pyrrolidon-Lösungsmittel in einer Menge zwischen 5 und 15 Gew.-%, bezogen auf das Gesamtgewicht der Tinte, vorgesehen ist.

7. Tinte nach einem der vorgehenden Ansprüche, **dadurch gekennzeichnet, dass** es sich bei dem Pyrrolidon-Lösungsmittel um 2-Pyrrolidon handelt.

8. Tinte nach einem der vorhergehenden Ansprüche, **dadurch gekennzeichnet, dass** es sich bei dem polymeren Bindemittel um ein Bindemittel auf Acrylharz-Basis handelt.

9. Tinte nach einem der vorhergehenden Ansprüche, **dadurch gekennzeichnet, dass** das Pigment in einer Menge zwischen 0,5 und 10 Gew.-%, vorzugsweise in einer Menge zwischen 1 und 8 Gew.-%, insbesondere in einer Menge zwischen 2 und 4 Gew.-%, bezogen auf das Gesamtgewicht der Tinte, vorgesehen ist.

10. Tinte nach einem der vorhergehenden Ansprüche, **dadurch gekennzeichnet, dass** das Wasser, bezogen auf das Gesamtgewicht der Tinte, in einer Menge zwischen 40 und 70 Gew.-%, insbesondere zwischen 45 und 55 Gew.-%, vorgesehen ist.

11. Verwendung der wasserbasierten Tinte nach einem der Ansprüche 1 bis 10 zum Beschichten oder Bedrucken von Oberflächen im Tintenstrahldruck-Verfahren.

12. Verfahren zum Beschichten oder Bedrucken von Oberflächen im Tintenstrahldruck-Verfahren, **dadurch gekennzeichnet, dass** die Oberfläche eines Substrats mit der Tinte nach einem der Ansprüche 1 bis 10 beschichtet oder bedruckt wird, wobei es sich bei der Oberfläche um eine nicht-absorbierende Oberfläche handelt.

13. Verfahren nach Anspruch 12, **dadurch gekennzeichnet, dass** die Oberfläche des Substrats ohne Hilfe eines Haftvermittlers beschichtet oder bedruckt wird.

14. Verfahren nach Anspruch 12 oder Anspruch 13, **dadurch gekennzeichnet, dass** die Oberfläche des Substrats ohne anschließendes Aufbringen eines Überlacks oder Decklacks beschichtet oder bedruckt wird.

15. Verfahren nach einem der Ansprüche 12 bis 14, **dadurch gekennzeichnet, dass** es sich bei der Oberfläche um eine Oberfläche aus Polyurethan (PU) oder Polyvinylchlorid (PVC) handelt.

16. Verfahren nach einem der vorhergehenden Ansprüche, insbesondere nach Anspruch 15, **dadurch gekennzeichnet, dass** es sich bei dem Substrat um Kunstleder handelt.

## Claims

1. Water-based ink for ink-jet printing, at least comprising at least one pigment, at least one polymeric binder, at least one organic solvent and water, wherein
- as an organic solvent, at least one water-soluble organic solvent is provided, selected from the group of 3-methyl-3-methoxy butanol (MMB), methoxy butanol (MB) and propylene glycol monomethyl ether (MP) in an amount between 1 and 20 % by weight, based on the total weight of the ink,
- at least one pyrrolidone solvent is provided as a further organic solvent in an amount between 2 and 20 % by weight, based on the total weight of the ink, and
- the ink additionally includes as an additive at least one preferably micronized wax in an amount between 0.05 and 3.5 % by weight, based on the total weight of the ink.

2. Ink according to claim 1, **characterized in that** the water-soluble organic solvent is 3-methyl-3-methoxy butanol (MMB).

3. Ink according to claim 1 or claim 2, **characterized in that** the water-soluble organic solvent is provided in an amount between 1 and 15 % by weight, in particular in an amount between 5 and 12 % by weight, based on the total weight of the ink.

4. Ink according to any of the preceding claims, **characterized in that** the wax is a polyethylene-based wax, in particular a wax composed of HDPE (High Density Polyethylene).

5. Ink according to any of the preceding claims, **characterized in that** the wax is included in an amount between 0.2 and 3 % by weight, in particular in an amount between 0.8 and 1.5 % by weight, based on the total weight of the ink.

6. Ink according to any of the preceding claims, **characterized in that** the pyrrolidone solvent is provided in an amount between 5 and 15 % by weight, based on the total weight of the ink.

7. Ink according to any of the preceding claims, **characterized in that** the pyrrolidone solvent is 2-pyrrolidone.

8. Ink according to any of the preceding claims, **characterized in that** the polymeric binder is an acrylic resin-based binder.

9. Ink according to any of the preceding claims, **characterized in that** the pigment is provided in an amount between 0.5 and 10 % by weight, preferably in an amount between 1 and 8 % by weight, in particular in an amount between 2 and 4 % by weight, based on the total weight of the ink.

10. Ink according to any of the preceding claims, **characterized in that** the water, based on the total weight of the ink, is provided in an amount between 40 and 70 % by weight, in particular between 45 and 55 % by weight.

11. Use of the water-based ink according to any of claims 1 to 10 for coating or printing of surfaces using an ink-jet printing method.

12. Method for coating or printing of surfaces using an ink-jet printing method, **characterized in that** the surface of a substrate is coated or printed using the ink according to any of claims 1 to 10, wherein the surface is a non-absorbing surface.

13. Method according to claim 12, **characterized in that** the surface of the substrate is coated or printed without the assistance of an adhesive primer.

14. Method according to claim 12 or claim 13, **characterized in that** the surface of the substrate is coated or printed without subsequent application of a top coat or finish paint.

15. Method according to any of claims 12 to 14, **characterized in that** the surface is a surface made of polyurethane (PU) or polyvinyl chloride (PVC).

16. Method according to any of the preceding claims, in particular according to claim 15, **characterized in that** the substrate is synthetic leather.

## Revendications

1. Encre à base d'eau pour l'impression jet d'encre, au moins comprenant au moins un pigment, au moins un liant polymère, au moins un solvant organique et de l'eau, dans laquelle
- en tant que solvant organique est prévu au moins un solvant organique hydrosoluble, choisi dans le groupe constitué par le 3-méthyl-3-méthoxybutanol (MMB), le méthoxybutanol (MB) et l'éther monométhylique de propylèneglycol (MP), en une quantité comprise entre 1 et 20 % en poids, par rapport au poids total de l'encre,
- en tant qu'autre solvant organique est prévu au moins un solvant de type pyrrolidone, en une quantité comprise entre 2 et 20 % en poids, par rapport au poids total de l'encre, et
- l'encre contient en outre comme additif au moins une cire de préférence micronisée, en une quantité comprise entre 0,05 et 3,5 % en poids, par rapport au poids total de l'encre.

2. Encre selon la revendication 1, **caractérisée en ce que** pour ce qui est du solvant organique hydrosoluble il s'agit du 3-méthyl-3-méthoxybutanol (MMB).

3. Encre selon la revendication 1 ou la revendication 2, **caractérisée en ce que** le solvant organique hydrosoluble est prévu en une quantité comprise entre 1 et 15 % en poids, en particulier en une quantité comprise entre 5 et 12 % en poids, par rapport au poids total de l'encre.

4. Encre selon l'une quelconque des revendications précédentes, **caractérisée en ce que** pour ce qui est de la cire il s'agit d'une cire à base de polyéthylène, en particulier d'une cire à base de HDPE (polyéthylène haute densité).

5. Encre selon l'une quelconque des revendications précédentes, **caractérisée en ce que** la cire est contenue en une quantité comprise entre 0,2 et 3 % en poids, en particulier en une quantité comprise entre 0,8 et 1,5 % en poids, par rapport au poids total de l'encre.

6. Encre selon l'une quelconque des revendications précédentes, **caractérisée en ce que** le solvant de type pyrrolidone est prévu en une quantité comprise entre 5 et 15 % en poids, par rapport au poids total de l'encre.

7. Encre selon l'une quelconque des revendications précédentes, **caractérisée en ce que** pour ce qui est du solvant de type pyrrolidone il s'agit de 2-pyrrolidone.

8. Encre selon l'une quelconque des revendications précédentes, **caractérisée en ce que** pour ce qui est du liant polymère il s'agit d'un liant à base de résine acrylique.

9. Encre selon l'une quelconque des revendications précédentes, **caractérisée en ce que** le pigment est prévu en une quantité comprise entre 0,5 et 10 % en poids, de préférence en une quantité comprise entre 1 et 8 % en poids, en particulier en une quantité comprise entre 2 et 4 % en poids, par rapport au poids total de l'encre.

10. Encre selon l'une quelconque des revendications précédentes, **caractérisée en ce que** l'eau, par rapport au poids total de l'encre, est prévue en une quantité comprise entre 40 et 70 % en poids, en particulier entre 45 et 55 % en poids.

11. Utilisation de l'encre à base d'eau selon l'une quelconque des revendications 1 à 10, pour le revêtement ou l'impression de surfaces dans le procédé d'impression jet d'encre.

12. Procédé pour le revêtement ou l'impression de surfaces dans le procédé d'impression jet d'encre, **caractérisé en ce qu'**on revêt ou imprime la surface d'un subjectile avec l'encre selon l'une quelconque des revendications 1 à 10, dans lequel pour ce qui est de la surface il s'agit d'une surface non absorbante.

13. Procédé selon la revendication 12, **caractérisé en ce qu'**on revêt ou imprime la surface du subjectile sans l'aide d'un agent d'adhérence.

14. Procédé selon la revendication 12 ou la revendication 13, **caractérisé en ce qu'**on revêt ou imprime la surface du subjectile sans application subséquente d'un vernis de surlaquage ou vernis de finition.

15. Procédé selon l'une quelconque des revendications 12 à 14, **caractérisé en ce que** pour ce qui est de la surface il s'agit d'une surface de polyuréthane (PU) ou poly(chlorure de vinyle) (PVC).

16. Procédé selon l'une quelconque des revendications précédentes, en particulier selon la revendication 15, **caractérisé en ce que** pour ce qui est du subjectile il s'agit de cuir artificiel.
